Europäisches Patentamt

European Patent Office

Office européen des brevets

(11) Veröffentlichungsnummer: **0 428 943 A2**

(12) **EUROPÄISCHE PATENTANMELDUNG**

(21) Anmeldenummer: 90121399.1

(22) Anmeldetag: 08.11.90

(51) Int. Cl.⁵: **B29C 59/00**

(30) Priorität: **17.11.89 DE 3938249**

(43) Veröffentlichungstag der Anmeldung:
**29.05.91 Patentblatt 91/22**

(84) Benannte Vertragsstaaten:
**AT BE CH DE DK ES FR GB GR IT LI LU NL SE**

(71) Anmelder: **Henkel Kommanditgesellschaft auf Aktien**
**Postfach 1100 Henkelstrasse 67**
**W-4000 Düsseldorf-Holthausen(DE)**

(72) Erfinder: **Fiedler, Jürgen**
**Hombergen 15**
**W-4045 Nettetal 1(DE)**
Erfinder: **Stöffler, Albert**
**Nikolausstrasse 39**
**W-4000 Düsseldorf 13(DE)**
Erfinder: **Solich, Peter**
**Everger Strasse 14**
**W-5000 Köln 80(DE)**

(54) **Polyesterformteile mit oberflächlicher Diffusionsbarriere.**

(57) Bei einem Polyesterformteil sollte eine oberflächliche Diffusionsbarriere angebracht werden. Dies gelang dadurch, daß die Diffusionsbarriere nach einem Verfahren hergestellt wurde, bei dem das Formteil bei Temperaturen zwischen 0 °C und 200 °C eine Sekunde bis 10 Minuten mit einem Gasstrom behandelt wird, der neben einem Inertgas 0,5 - 15 Volumen-% Fluor enthält.

EP 0 428 943 A2

## POLYESTERFORMTEIL MIT OBERFLÄCHLICHER DIFFUSIONSBARRIERE

Die Erfindung betrifft Polyesterformteile, die zumindest weitgehend für Duftstoffe oder Aromastoffe undurchlässig sind.

Komplex aufgebaute Verpackungssysteme enthalten oftmals Kunststoffteile, die speziellen mechanischen Eigenschaften wie hohe Elastizität und dergleichen genügen müssen. Derartige Kunststoffteile sind aufgrund ihrer chemischen Eigenschaften mitunter mit dem Nachteil behaftet, das sie für einzelne Inhaltsstoffe des zu verpackenden Guts permeirbar sind. Ein Beispiel sind Zahnpastaspender mit Funktionsteilen aus hoch elastischen Polyestern. Wenn gleich die Polyesterteile den an sie gestellten mechanischen Anforderungen hervorragend genügen, so erweist sie sich jedoch als durchlässig für eine Reihe von Geschmackstoffen, die in den darin verpackten Zahnpasten enthalten sind. Bei längerer Lagerung kommt es dann zu einer geschmacklichen Veränderung des verpackten Gutes.

Um diesen Nachteil zu beheben ist schon versucht worden derartige Kunststoffteile durch Lakkieren und dergleichen so zu verändern, daß zum einen die mechanischen Eigenschaften erhalten bleiben zum anderen eine Diffusionsbarriere aufgebaut wird. Wenn gleich derartige Verfahren eine graduelle Verbesserung mit sich bringen, so stellen sie dennoch keine überzeugende Lösungen dar.

In der deutschen Patentschrift DE 35 11 743 wird ein Verfahren zur Fluorierung der Oberflächen von Polymere beschrieben, bei dem die Oberflächen einige Zeit zur Bildung von Fluorkohlenstoff- und Fluorkohlenwasserstoff-Verbindungen der Einwirkung eines fluorhaltigen Behandlungsgases ausgesetzt werden. Zwar spricht das deutsche Patent ganz allgemein von Polymeren, doch wird im engeren Sinne nur Polyethylen beschrieben. Ziel des Verfahrens ist es, die Permeation von Kohlenwasserstoffen durch die Wandung von Polyethylenbehältern zu verhindern. Dem deutschen Patent ist zu entnehmen, daß bei der Fluorierungsreaktion oberflächlich fluorierte bzw. oberflächlich perfluorierte Verbindungen entstehen.

Aufgrund der hohen Energieinhalte der Kohlenstofffluor-Bindung im Vergleich zu Bindungen des Kohlenstoffs zu anderen Elementen, wird der Fachmann, ausgehend von diesem Patent, nicht den Schluß wagen, daß auch Polykondensate wie beispielsweise Polyester oberflächlich fluoriert werden können. Hier steht nämlich zu vermuten, daß Polyester Kettenbrüche in beträchtlichem Umfang erleiden könnten und daß die mechanischen Eigenschaften durch die Fluorierungsreaktionen stark beeinträchtigt werden.

Erfindungsgemäß wurde überraschend gefunden, daß Polyester durch Fluorierung mit einer oberflächlichen Diffusionsbarriere versehen werden können. Weiterhin wurde gefunden, daß die bei den Benzintanks aus Polyethylen mögliche Problemlösung auf dem ganz unterschiedlichen Arbeitsfeld der Verpackung von aromahaltigen Zubereitungen in Packmitteln, die Polyester enthalten anwendbar ist.

Gegenstand der Erfindung ist daher ein Polyesterformteil mit oberflächlicher Diffusionsbarriere, dadurch gekennzeichnet, daß die Diffusionsbarriere nach einem Verfahren hergestellt wird, bei dem das Formteil bei Temperaturen zwischen 0° C und 200° C 1 sec bis 10 min mit einem Gasstrom behandelt wird, der neben einem Inertgas 0,5-15 Vol.-% Fluor enthält.

Ein weiterer Gegenstand ist die Verwendung von Polyesterformteilen nach einem der Ansprüche 1 bis 6 zur Herstellung von Verpackungsmitteln für aroma- oder duftstoffhaltige Zubereitungen, insbesondere Zahnpasten oder Kosmetika.

Zur Erzeugung der erfindungsgemäßen Polyesterformteile mit oberflächlicher Diffusionsbarriere werden die Polyesterformteile somit einer Fluorierung unterzogen. Die Fluorierung kann bei Temperaturen zwischen 0° C und 200° C durchgeführt werden, wobei die Behandlungsdauer 10 Minuten bis 1 Sekunde beträgt. Der zur Behandlung eingesetzte Gasstrom soll neben einem Inertgasüberschuß 0,5 bis 15 Volumen-% Fluor enthalten. Geeignete Inertgase sind zum Beispiel Stickstoff oder Argon. Bevorzugt ist es mit einem Gasstrom zu fluorieren, der 3 bis 10 Volumen-% Fluor enthält. Bevorzugte Fluorierungstemperaturen liegen zwischen 20 und 70° C. Die Verweilzeit ist vorzugsweise zwischen 1 und 5 Minuten anzusetzten.

Nach dem erfindungsgemäßen Verfahren können Formteile aus unterschiedlichen Polyestern mit einer oberflächlichen Diffusionsbarriere versehen werden. Geeignete Polyester sind beispielsweise Polyester auf Basis von Polyethylenglykolterephtalat. Das Verfahren ist besonders geeignet für Polyesterelastomere, insbesondere Mehrblockpolyester auf Basis von Polyethylenglycolterephthalat mit eingebauten Polyetherblöcken. Dabei können sich diese Polyetherblöcke von unterschiedlichen Polyethern ableiten beispielsweise Polyethylenoxid, Polypropylenoxid oder von Polytetrahydrofuran.

Als ein für Verkaufsmittel besonders geeignetes Material ist ein Polyesterelastomer anzusehen, das als Blockcopolymer von langkettigen Polyetherdiolterephthalaten und kurzkettigen Dioltherephthalaten ausgebildet ist und unter der Bezeichnung Hystrel 5526 von der Firma E.I. Dupont de Nemour angeboten wird.

Die fluorierten Polyester zeigen besondere Stabilität gegen die Permenation von Duftstoffen und Aromastoffen. Sie können darüber hinaus auch zur Verpackung von organischen Flüssigkeiten und dergleichen eingesetzt werden.

Beispiel

Elastische Polyesterkappen aus dem Polyestermaterial Hytrel 5526 wurden einer oberflächlichen Fluorierung gemäß der deutschen Patentschrift DE 35 11 743 unterzogen. Die Kappen wurden als elastische Membranen in Zahnpastaspender eingebaut, die fertigen Spender mit Zahnpasta gefüllt und einem Lagertest unterzogen. Nach mehrwöchiger Lagerung wurde festgestellt, daß aus Zahnpastaspendern mit fluorierten Membranen sich praktisch keine Aromen verflüchtigt haben. Im Vergleich dazu erlitten Zahnpastaspender ohne fluorierten Membranen einen deutlichen Aromaverlust. Eine Veränderung der mechanischen Eigenschaften der Membranen wurde nicht beobachtet.

**Ansprüche**

1. Polyesterformteil mit oberflächlicher Diffusionsbarriere, dadurch gekennzeichnet, daß die Diffusionsbarriere nach einem Verfahren hergestellt wird, bei dem das Formteil bei Temperaturen zwischen $0\,^{\circ}C$ und $200\,^{\circ}C$ 1 Sek. bis 10 Min. mit einem Gasstrom behandelt wird, der neben einem Inertgas 0,5-15 Vol.-% Fluor enthält.

2. Polyesterformteil nach Anspruch 1, dadurch gekennzeichnet, daß aus einem Polyester auf Basis von Polyethylenglykolterephtalat besteht.

3. Polyesterformteil nach einem der Ansprüche 1 oder 2, dadurch gekennzeichnet, daß es sich um ein Polyesterelastomer, insbesondere einen Mehrblockpolyester auf Basis Polyethylenglycolterephtalat mit eingebauten Polyetherblöcken handelt.

4. Polyesterformteil nach einem der Ansprüche 1 bis 3, dadurch gekennzeichnet, daß die Diffusionsbarriere mit einer 3-10 vol.-%igen Mischung von Fluor mit Stickstoff erzeugt wird.

5. Polyesterformteil nach einem der Ansprüche 1 bis 4, dadurch gekennzeichnet, daß die Diffusionsbarriere bei einer Temperatur zwischen $20\,^{\circ}C$ und $70\,^{\circ}C$ erzeugt wird.

6. Polyesterformteil nach einem der Ansprüche 1 bis 5, dadurch gekennzeichnet, daß die Diffusionsbarriere bei einer Verweilzeit von 1 bis 5 Min. erzeugt wird.

7. Verwendung von Polyesterformteilen nach einem der Ansprüche 1 bis 6 zur Herstellung von Verpakkungsmitteln für aroma- oder duftstoffhaltige Zubereitungen, insbesondere Zahnpasten oder Kosmetika.